# EUROPEAN PATENT APPLICATION

(11) **EP 4 716 277 A1**
(43) Date of publication of application: **25.03.2026**
(21) Application number: 23936960.6
(22) Date of filing: 15.05.2023
(51) Int. Cl.: H04W 24/02

(54) **DATA PROCESSING METHOD AND APPARATUS**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Hersina, Günter
(86) International application number: PCT/CN2023/094382
(87) International publication number: WO 2024/234273

(57) **Abstract**

Disclosed in embodiments of the present disclosure are a data processing method and an apparatus, applicable to the technical field of communications. The method executed by a first entity comprises: providing first information, where the first information is used for assisting a unified data management (UDM) entity in creating, updating or deleting a privacy configuration file of a terminal device, and the privacy configuration file is a file associated with ranging and/or sidelink positioning service. In this way, the UDM entity can be assisted in creating, updating, or deleting the privacy configuration file of the terminal device, such that the privacy configuration file corresponding to the terminal device can be accurately determined.

## Description

### FIELD

The present invention relates to the field of communication technologies, and in particular to a data processing method and a data processing device.

### BACKGROUND

Ranging service refers to determining a relative distance between two user equipments (UEs) and/or determining a relative direction or angle of a UE with respective to another UE. Sidelink (SL) positioning service enables a UE to use a direct communication interface (PC5) link to obtain its absolute position, relative position or ranging information, etc. Ranging/SL positioning services can be applied to various vertical fields such as consumption, smart home, smart city, smart transportation, smart retail, and Industry 4.0, etc.

### SUMMARY

Embodiments of the present invention provide a data processing method and a data processing device. Based on first information provided by a first entity, a unified data management (UDM) entity is assisted in creating, updating, or deleting a privacy profile of a user equipment. In this way, the UDM entity can be assisted in creating, updating, or deleting the privacy profile of the user equipment, and thus the privacy profile corresponding to the user equipment can be determined accurately.

In a first aspect, embodiments of the present invention provide a data processing method, which is performed by a first entity. The method includes: providing first information, where the first information is used to assist a unified data management (UDM) entity in creating, updating or deleting a privacy profile of a user equipment, and the privacy profile is a file associated with a ranging and/or sidelink positioning service.

In a second aspect, embodiments of the present invention provide a data processing method, which is performed by a gateway mobile location center (GMLC) entity. The method includes:
receiving a service request transmitted by a transmission end, where the service request includes an identifier of a user equipment;
obtaining a privacy profile associated with the identifier of the user equipment from a unified data management (UDM) entity, where the privacy profile is a file associated with a ranging and/or sidelink positioning service; and
determining, based on the privacy profile, whether the service request is allowed.

In a third aspect, embodiments of the present invention provide a data processing method, which is performed by a unified data management (UDM) entity. The method includes:
receiving first information; and
creating, updating or deleting a privacy profile of a user equipment based on the first information, where the privacy profile is a file associated with a ranging and/or sidelink positioning service.

In a fourth aspect, embodiments of the present invention provide a communication device, which has some or all of functions of a first entity implementing the method described in the first aspect. For example, functions of the communication device may include functions of some or all of the embodiments in the present invention, or may include functions of implementing any one of the embodiments in the present invention alone. The functions may be implemented by hardware, or by hardware executing corresponding software. The hardware or software includes one or more units or modules corresponding to the above functions.

In an implementation, a structure of the communication device may include a reception and transmission module and a processing module, and the processing module is configured to support the communication device to execute corresponding functions in the above method. The reception and transmission module is configured to support communication between the communication device and other device.

The communication device may further include a storage module, and the storage module is configured to couple with the reception and transmission module and the processing module, and store a computer program and data needed for the communication device.

In an implementation, the communication device includes:
a reception and transmission module, configured to provide first information, where the first information is used to assist a unified data management (UDM) entity in creating, updating or deleting a privacy profile of a user equipment, and the privacy profile is a file associated with a ranging and/or sidelink positioning service.

In a fifth aspect, embodiments of the present invention provide another communication device, which has some or all of functions of a gateway mobile location center GMLC entity implementing the method described in the second aspect. For example, functions of the communication device may include functions of some or all of the embodiments in the present invention, or may include functions of implementing any one of the embodiments in the present invention alone. The functions may be implemented by hardware, or by hardware executing corresponding software. The hardware or software includes one or more units or modules corresponding to the above functions.

In an implementation, a structure of the communication device may include a reception and transmission module and a processing module, and the processing module is configured to support the communication device to execute corresponding functions in the above method. The reception and transmission module is configured to support communication between the communication device and other device. The communication device may further include a storage module, and the storage module is configured to couple with the reception and transmission module and the processing module, and store a computer program and data needed for the communication device.

In an implementation, the communication device includes:
a reception and transmission module, configured to receive a service request transmitted by a transmission end, where the service request includes an identifier of a user equipment; and
a processing module, configured to:
   obtain a privacy profile associated with the identifier of the user equipment from a unified data management (UDM) entity, where the privacy profile is a file associated with a ranging and/or sidelink positioning service; and
   determine whether the service request is allowed based on the privacy profile.

In a sixth aspect, embodiments of the present invention provide another communication device, which has some or all of functions of a unified data management (UDM) entity implementing the method described in the third aspect. For example, functions of the communication device may include functions of some or all of the embodiments in the present invention, or may include functions of implementing any one of the embodiments in the present invention alone. The functions may be implemented by hardware, or by hardware executing corresponding software. The hardware or software includes one or more units or modules corresponding to the above functions.

In an implementation, a structure of the communication device may include a reception and transmission module and a processing module, and the processing module is configured to support the communication device to execute corresponding functions in the above method. The reception and transmission module is configured to support communication between the communication device and other device. The communication device may further include a storage module, and the storage module is configured to couple with the reception and transmission module and the processing module, and store a computer program and data needed for the communication device.

In an implementation, the communication device includes:
a reception and transmission module, configured to receive first information; and
a processing module, configured to create, update or delete a privacy profile of a user equipment based on the first information, where the privacy profile is a file associated with a ranging and/or sidelink positioning service.

In a seventh aspect, embodiments of the present invention provide a communication device, which includes a processor. When the processor calls a computer program in a memory, the method described in the first aspect is performed.

In an eighth aspect, embodiments of the present invention provide a communication device, which includes a processor. When the processor calls a computer program in a memory, the method described in the second aspect is performed.

In a ninth aspect, embodiments of the present invention provide a communication device, which includes a processor. When the processor calls a computer program in a memory, the method described in the third aspect is performed.

In a tenth aspect, embodiments of the present invention provide a communication device, including a processor and a memory, where the memory is configured to store a computer program; the processor is configured to execute the computer program stored in the memory to cause the communication device to perform the method described in the first aspect.

In an eleventh aspect, embodiments of the present invention provide a communication device, including a processor and a memory, where the memory is configured to store a computer program; the processor is configured to execute the computer program stored in the memory to cause the communication device to perform the method described in the second aspect.

In a twelfth aspect, embodiments of the present invention provide a communication device, including a processor and a memory, where the memory is configured to store a computer program; the processor is configured to execute the computer program stored in the memory to cause the communication device to perform the method described in the third aspect.

In a thirteenth aspect, embodiments of the present invention provide a communication device, including a processor and an interface circuit, where the interface circuit is configured to receive code instructions and transmit them to the processor, and the processor is configured to execute the code instructions to cause the device to perform the method described in the first aspect.

In a fourteenth aspect, embodiments of the present invention provide a communication device, including a processor and an interface circuit, where the interface circuit is configured to receive code instructions and transmit them to the processor, and the processor is configured to execute the code instructions to cause the device to perform the method described in the second aspect.

In a fifteenth aspect, embodiments of the present invention provide a communication device, including a processor and an interface circuit, where the interface circuit is configured to receive code instructions and transmit them to the processor, and the processor is configured to execute the code instructions to cause the device to perform the method described in the third aspect.

In a sixteenth aspect, embodiments of the present invention provide a communication system, and the system includes the communication devices according to the fourth aspect to the sixth aspect, or the system includes the communication devices according to the seventh aspect to the ninth aspect, or the system includes the communication devices according to the ten aspect to the twelfth aspect, or the system includes the communication devices according to the thirteen aspect to the fifteenth aspect.

In a seventeenth aspect, embodiments of the present invention provide a computer readable storage medium, configured to store instructions used by the first entity described above, and when the instructions are executed, the reception end is caused to perform the method described in the first aspect.

In an eighteenth aspect embodiments of the present invention provide a readable storage medium, configured to store instructions used by the Gateway Mobile Location Center GMLC entity described above, and when the instructions are executed, the transmission end is caused to perform the method described in the second aspect.

In a nineteenth aspect, embodiments of the present invention provide a readable storage medium, configured to store instructions used by the UDM entity described above, and when the instructions are executed, the transmission end is caused to perform the method described in the third aspect.

In a twentieth aspect, the present invention further provides a computer program product including a computer program, which, when executed on a computer, causes the computer to perform the method described in the first aspect.

In a twenty-first aspect, the present invention further provides a computer program product including a computer program, which, when executed on a computer, causes the computer to perform the method described in the second aspect.

In a twenty-second aspect, the present invention further provides a computer program product including a computer program, which, when executed on a computer, causes the computer to perform the method described in the third aspect.

In a twenty-third aspect, the present invention provides a chip system, including at least one processor and an interface, for supporting a reception end to implement functions involved in the first aspect, such as determining or processing at least one of data or information involved in the above method. In a feasible design, the chip system further includes a memory, and the memory is configured to store a computer program and data needed by the first entity. The chip system may be formed by chips, or may include chips and other discrete devices.

In a twenty-fourth aspect, the present invention provides a chip system, including at least one processor and an interface, for supporting a transmission end to implement functions involved in the second aspect, such as determining or processing at least one of data or information involved in the above method. In a feasible design, the chip system further includes a memory, and the memory is configured to store a computer program and data needed by the GMLC entity. The chip system may be formed by chips, or may include chips and other discrete devices.

In a twenty-fifth aspect, the present invention provides a chip system, including at least one processor and an interface, for supporting a reception end to implement functions involved in the third aspect, such as determining or processing at least one of data or information involved in the above method. In a feasible design, the chip system further includes a memory, and the memory is configured to store a computer program and data needed by the UDM entity. The chip system may be formed by chips, or may include chips and other discrete devices.

In a twenty-sixth aspect, the present invention provides a computer program, which, when executed on a computer, causes the computer to perform the method described in the first aspect.

In a twenty-seventh aspect, the present invention provides a computer program, which, when executed on a computer, causes the computer to perform the method described in the second aspect.

In a twenty-eighth aspect, the present invention provides a computer program, which, when executed on a computer, causes the computer to perform the method described in the third aspect.

### BRIEF DESCRIPTION OF THE DRAWINGS

To better clarify technical solutions of embodiments of the present invention or the background, drawings used in the embodiments of the present invention or the background are described hereinafter.
FIG. 1 is a schematic diagram of an architecture of a communication system according to the present invention;
FIG. 2 is a flow chart of a data processing method according to embodiments of the present invention;
FIG. 3 is a flow chart of another data processing method according to embodiments of the present invention;
FIG. 4 is a flow chart of another data processing method according to embodiments of the present invention
FIG. 5 is a flow chart of another data processing method according to embodiments of the present invention;
FIG. 6 is an interactive schematic diagram of a data processing method according to embodiments of the present invention;
FIG. 7 is an interactive schematic diagram of another data processing method according to embodiments of the present invention;
FIG. 8 is a structural diagram of a communication device according to embodiments of the present invention;
FIG. 9 is a structural diagram of another communication device according to embodiments of the present invention; and
FIG. 10 is a schematic structural diagram of a chip according to embodiments of the present invention.

### DETAILED DESCRIPTION

To facilitate understanding of the technical solutions of the present invention, some terms involved in the embodiments of the present invention are briefly introduced hereinafter.

### 1. Application Function (application function, AF)

AF is a functional network element on the core network side, which can interact with the 3GPP core network to provide services, and support the following functions: influencing service flow routing on the application side; accessing network exposure functions; exchanging with the policy framework for policy control; operator-trusted application functions being capable of directly interacting with related network functions based on deployment of the operator.

### 2. Unified Data Management (Unified Data Management, UDM)

UDM is responsible for the management of user identification, contract data, and authentication data, and user service network element registration management.

In order to better understand the data processing method and the data processing device according to the embodiments of the present invention, a communication system to which the embodiments of the present invention are applicable is first described hereinafter.

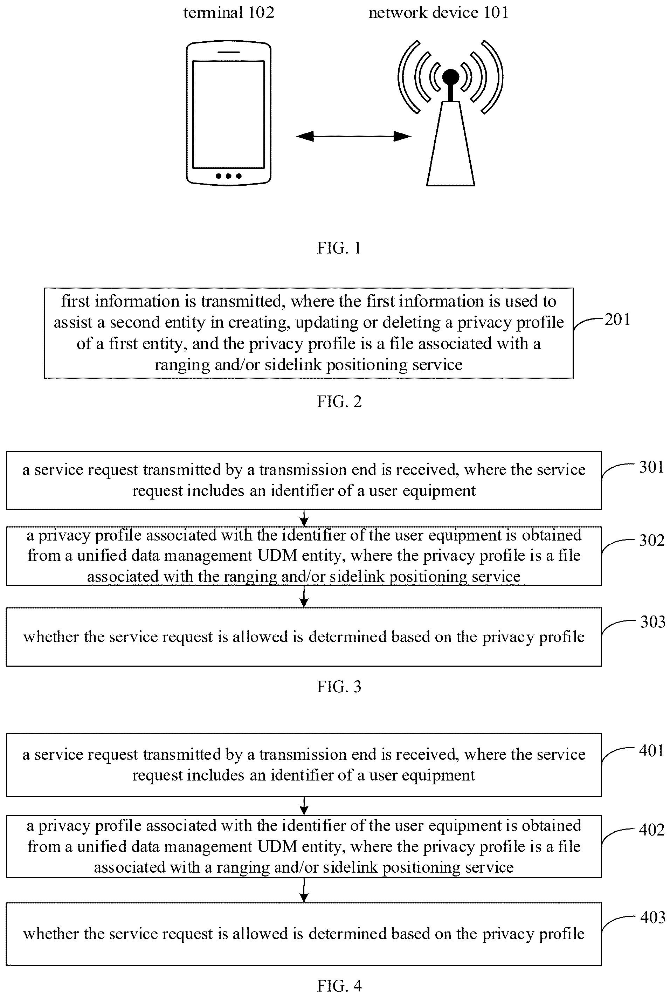

Reference is made to FIG. 1, which is a schematic diagram of an architecture of a communication system according to embodiments of the present invention. The communication system may include, but is not limited to, one network device and one terminal. The quantity and forms of devices shown in FIG. 1 are only for examples and do not constitute a limitation on the embodiments of the present invention. In actual applications, two or more than two network devices and two or more than two terminals may be included. In FIG. 1, a case where the communication system includes one network device 101 and one terminal 102 is taken as an example.

It should be noted that the technical solutions of the embodiments of the present invention can be applied to various communication systems, such as a long term evolution (Long Term Evolution, LTE) system, a 5th generation (5th Generation, 5G) mobile communication system, a 5G new radio (New Radio, NR) system, or other new mobile communication systems in the future.

The network device 101 in the embodiments of the present invention is an entity on a network side for transmitting or receiving signals, which communicates with a terminal. The network device 101 may be a base transceiver station (base transceiver station, BTS) in a global system for mobile communications (global system for mobile communications, GSM) system or a code division multiple access (code division multiple access, CDMA) system, or may be a nodeB (nodeB, NB) in a wideband code division multiple access (wideband code division multiple access, WCDMA) system, or may be an evolved nodeB (evolved nodeB, eNB or eNodeB) in an LTE system, or may be a radio controller in a cloud radio access network (cloud radio access network, CRAN) scenario, or may be a radio network controller (radio network controller, RNC), a base station controller (base station controller, BSC), a home base station (for example, a home evolved nodeB or home nodeB, HNB), a baseband unit (baseband unit, BBU), or the network side device may be a relay station, an access point, an in-vehicle device, a wearable device, a network side device in a 5G network, or a network side device in a future-evolved PLMN network, etc. It may be an access point (AP), a wireless relay node, a wireless backhaul node, a transmission point (TP), or a transmission and reception point (TRP), etc., in a WLAN. It may be a gNB or a transmission point (TRP or TP) in a new radio (NR) system, or one or a group of antenna panels (including multiple antenna panels) of a base station in a 5G system, or it may be a network node constituting a gNB or a transmission point, such as a baseband unit (BBU) or a distributed unit (DU), etc. The specific technologies and specific device forms adopted by the network side device are not limited in the embodiments of the present invention. The network side device provided by the embodiments of the present invention may be formed by a centralized unit (CU) and a distributed unit (DU), the CU may also be referred to as a control unit. The network side device, such as protocol layers of the network side device, may be separated by using the structure of CU-DU, where functions of some protocol layers are arranged in the CU for centralized control, and functions of some or all of the remaining protocol layers are distributed in the DU, and the CU centrally controls the DU.

The network side device 101 in the embodiments of the present invention may be an application function AF entity on the network side, or it may be a unified data management UDM entity on the network side, or it may be a gateway mobile location center (gateway mobile location center, GMLC) entity, etc., which is not limited by the present invention.

The terminal 102 in the embodiments of the present invention may be a device that provides voice/data connectivity to a user, such as a handheld device or a vehicle-mounted device with a wireless connection function. Some examples of terminals include: a mobile phone, a tablet computer, a laptop computer, a PDA, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device with wireless communication function, a computing device or other processing device connected to a wireless modem, an in-vehicle device, a wearable device, a terminal in 5G network or future evolved public land mobile network (PLMN) and/or any other suitable device for communicating on a wireless communication system, which is not limited by the embodiments of the present invention.

Wearable devices, also referred to as wearable smart devices, are a general term for devices developed by applying wearable technology to intelligently design everyday wearables, such as glasses, wristbands, watches, clothing, and shoes. A wearable device is a portable device that is worn directly on the body or integrated into the clothing or accessories of the user. Wearable devices are not merely hardware; they also achieve powerful functionality through software support, data interaction, and cloud interaction. Broadly defined wearable smart devices include those with comprehensive functions and larger sizes that can implement full or partial functions independently of smartphones, such as smartwatches or smart glasses, as well as those focused on specific types of application functions that need to work in conjunction with other devices like smartphones, such as various smart bands and smart jewelry for vital signs monitoring.

In addition, in the embodiments of the present invention, the terminal 102 may be a terminal in an Internet of Things (IoT) system. IoT is an important component of the future development of information technology. Its main technical characteristic involves connecting objects to the network through communication technologies, thereby forming an intelligent network that enables human-machine interconnection and thing-thing interconnection.

In addition, in the embodiments of the present invention, the terminal 102 may include a smart printer, a train detector, and a sensor used in gas station, etc. Its main functions include collecting data (for some terminals), receiving control information and downlink data from a network side device, transmitting electromagnetic waves, and sending uplink data to a network side device.

It should be noted that the technical solutions of the embodiments of the present invention may be applied to various communication systems, such as a Long Term Evolution (Long Term Evolution, LTE) system, a fifth-generation (5th generation, 5G) mobile communication system, a 5G New Radio (New Radio, NR) system, or other future new mobile communication system, etc.

It may be understood that the communication system described in the embodiments of the present invention is intended to illustrate the technical solutions of the embodiments more clearly and does not limit the scope of the technical solutions provided by the embodiments. Those skilled in the art will appreciate that as system architectures evolve and new service scenarios emerge, the technical solutions provided by the embodiments of the present invention are equally applicable to similar technical problems.

Furthermore, to facilitate understanding of the embodiments of the present invention, the following points are clarified.

First, terms like "first" and "second" and various numerical numbers used in the present invention are merely for distinguishing descriptions for convenience and are not intended to limit the scope of the embodiments of the present invention. For example, they may be used for distinguishing different pieces of information, different intervals, different slots, etc.

Second, the term "protocol" involved in the embodiments of the present invention may refer to a standard protocol in the field of communications. For example, it may include an LTE protocol, an NR protocol, or a related protocol applied in future communication systems, which is not limited in the present invention.

Third, the embodiments of the present invention list multiple implementations to clearly illustrate the technical solutions. Those skilled in the art will understand that the multiple embodiments provided in the present invention may be executed individually, or may be executed together with the methods of other embodiments in the embodiments of the present invention, or may be executed individually or in combination with some methods from other related technologies, which are not limited in the embodiments of the present invention.

Hereinafter, the data processing method and the data processing device provided by the present invention are described in detail in conjunction with the drawings.

Ranging service refers to determining a relative distance between two user equipments (User Equipment, UE) and/or determining a relative direction or angle of a UE with respective to another UE. Sidelink (Sidelink, SL) positioning service enables a UE to use a direct communication interface (PC5) link to obtain its absolute position, relative position or ranging information, etc. Ranging/SL positioning services may be applied to various vertical fields such as consumption, smart home, smart city, smart transportation, smart retail, and Industry 4.0, etc.

In the related technologies, in order to authorize an application server or network function (NF) to obtain a result (for example, location information) measured by a ranging/SL positioning service, a gateway mobile location center (Gateway Mobile Location Center, GMLC) interacts with a unified data management (Unified Data Management, UDM) to check a privacy profile of a UE, and interacts with an access and mobility management function (Access and Mobility Management Function, AMF) to perform a UE privacy verification.

However, specific information contained in the privacy profile of the UE remains unclear, that is, it is not yet clear which network functions (network function, NF), application functions (application function, AF), location services (location services, LCS) clients, client user equipments (Client UE), server user equipments (Server UE), etc., are allowed or not allowed to obtain the ranging/SL positioning information of the UE.

In view of the above, the present invention provides a data processing method. Based on first information provided by a first entity, a unified data management (UDM) entity is assisted in creating, updating, or deleting a privacy profile of a user equipment. In this way, the UDM entity can be assisted in creating, updating, or deleting the privacy profile of the user equipment, and thus the privacy profile corresponding to the user equipment can be determined accurately.

Reference is made to FIG. 2, which is a flow chart of a data processing method according to embodiments of the present invention. As shown in FIG. 2, the method is applied to a first entity, and the method may include but is not limited to the following step.

Step 201: first information is provided, where the first information is used to assist a UDM entity in creating, updating or deleting a privacy profile of a user equipment, and the privacy profile is a file associated with a ranging and/or sidelink positioning service.

In some practicable implementations, the first entity may be at least one of the following: the user equipment or an application function (AF) network element.

The first information may include ranging and/or sidelink positioning authorization data of the user equipment, such as: whether the user equipment allows an NF, an AF, an LCS client, a client user equipment (Client UE), a server user equipment (Server UE), etc., to obtain ranging and/or sidelink positioning information; in a case of allowing obtaining the ranging and/or sidelink positioning information, whether it is needed to further transmit a notification to the first entity, whether a privacy verification is required, whether a response needs to be received, before the location of the first entity is obtained.

The client user equipment (Client UE) is a user equipment that initiates a ranging service request.

The server user equipment (Server UE) is a user equipment that provides method determination for services based on sidelink positioning and ranging, assistance for data distribution and/or position calculation function and/or positioning calculation function.

For example, in a case that the user equipment registers application A for the first time and allows application A to obtain the ranging and/or sidelink positioning service after transmitting a notification, the first information may include: the identifier of application A, and that the ranging and/or sidelink positioning service is allowed while transmitting a notification to the user equipment is required.

In some practicable implementations, the first information further includes an identifier corresponding to the user equipment, so that the UDM can create, update, or delete the privacy profile of the user equipment based on the identifier of the user equipment.

In the present invention, in a case that the first information is received by the unified data management UDM entity, and it is determined that the UDM does not contain the privacy profile corresponding to the user equipment, then the first information is used to assist the unified data management UDM entity in creating the privacy profile of the user equipment; in a case that the first information is received by the unified data management UDM entity, and it is determined that the unified data management UDM entity contains the privacy profile corresponding to the user equipment but they are not the same, then the first information is used to assist the unified data management UDM entity in updating the privacy profile of the user equipment; in a case that the first information provided by the first entity includes a deletion indication, the first information is used to assist the unified data management UDM entity in deleting the privacy profile of the user equipment.

In some practicable implementations, in a case that the first entity is the user equipment, the user equipment needs to first provide the first information to an authentication management function (Authentication Management Function, AMF) entity, and the AMF entity forwards the first information to the unified data management UDM entity. In a case that the first entity is an AF network element, the AF network element directly provides the first information to the unified data management UDM entity.

It should be noted that for the role and implementation of the privacy profile, reference may be made to the detailed description of other embodiments in the present invention, which will not be further described herein.

In the present invention, the first entity provides the first information for assisting the UDM entity in creating, updating or deleting the privacy profile of the user equipment, where the privacy profile is a file associated with the ranging and/or sidelink positioning service. In this way, the UDM entity can be assisted in creating, updating, or deleting the privacy profile of the user equipment, and thus the privacy profile corresponding to the user equipment can be determined accurately.

Reference is made to FIG. 3, which is a flow chart of a data processing method according to embodiments of the present invention. As shown in FIG. 3, the method is applied to a GMLC entity, and the method may include but is not limited to the following steps.

Step 301: a service request transmitted by a transmission end is received, where the service request includes an identifier of a user equipment.

The transmission end may be any NF, AF, LCS client, client user equipment (Client UE), server user equipment (Server UE) that transmits the service request, etc.

The user equipment may be a user equipment for which the transmission end requests the ranging and/or sidelink positioning service.

The service request may be used to request the GMLC entity to provide the ranging and/or sidelink positioning service corresponding to the user equipment.

Step 302: a privacy profile associated with the identifier of the user equipment is obtained from a UDM entity, where the privacy profile is a file associated with the ranging and/or sidelink positioning service.

It should be noted that the UDM entity stores privacy profiles corresponding to various user equipments. After the GMLC entity receives the service request sent by the transmission end, it may obtain the privacy profile associated with the identifier of the user equipment from the UDM entity, and then determine whether the service request is allowed based on the privacy profile.

Optionally, the GMLC entity may transmit an obtaining request for the privacy profile to the UDM entity, where the obtaining request includes the identifier of the user equipment. Thus, the privacy profile associated with the identifier of the user equipment is obtained from the UDM entity.

In some practicable implementations, the privacy profile may include at least one of the following:
a ranging and/or sidelink positioning privacy indicator, each call and/or session unrelated class, a location service client list, a GMLC address list.

In some practicable implementations, the ranging and/or sidelink positioning privacy indicator is used to indicate one or more of the following: ranging and/or sidelink positioning is allowed, ranging and/or sidelink positioning is not allowed, or a valid time period of the ranging and/or sidelink positioning privacy indicator.

In a case that the ranging and/or sidelink positioning privacy indicator indicates that ranging and/or sidelink positioning is allowed, it may be understood as the user equipment allowing the NF, AF, LCS client, client UE, server UE, etc., that it has authorized to perform the ranging and/or sidelink positioning service for it.

In a case that the ranging and/or sidelink positioning privacy indicator indicates that ranging and/or sidelink positioning is not allowed, it may be understood as the user equipment not allowing any NF, AF, LCS client, client UE, server UE, etc., to perform the ranging and/or sidelink positioning service for it.

The valid time period of the ranging and/or sidelink positioning privacy indicator indicated by the privacy indicator may be understood as a valid duration of the ranging and/or sidelink positioning privacy indicator, where the privacy indicator becomes invalid after this valid duration expires.

In some practicable implementations, the call and/or session unrelated class may include at least one of the following:
a core network element, a trusted AF, or a non-external location service (LCS) client;
a first list, where the first list includes a first identifier of one or more of: an untrusted AF entity, or an external LCS client;
a second list, where the second list includes a second identifier of one or more of: a client user equipment (Client UE), or a server user equipment (Server UE); or
a third list, where the third list includes a third identifier of one or more ranging and/or sidelink positioning applications.

It should be noted that the trusted AF entity may be an AF deployed by the operator itself, and the untrusted AF entity may be an AF deployed by a third party.

In some practicable implementations, the call and/or session unrelated class may further include at least one of the following:
a first privacy configuration associated with the core network element, the trusted AF, or the non-external LCS client; a second privacy configuration associated with each first identifier in the first list; a third privacy configuration associated with each second identifier in the second list; or a fourth privacy configuration associated with each third identifier in the third list.

In some practicable implementations, the privacy configuration may include privacy setting information, time setting information, and area range setting information.

In some practicable implementations, the privacy setting information may include any one of the following:
the ranging and/or sidelink positioning service is not allowed;
the ranging and/or sidelink positioning service is allowed, and transmitting a notification to the first entity is not required (i.e., the location of the first entity can be obtained without transmitting a notification to the first entity);
the ranging and/or sidelink positioning service is allowed, and transmitting a notification to the first entity is required (i.e., a notification needs to be transmitted to the first entity to obtain the location of the first entity);
the ranging and/or sidelink positioning service is allowed, and transmitting a notification to the first entity and performing information verification with the first entity are required (i.e., a notification needs to be transmitted to the first entity, and in a case that the information verification is passed, the location of the first entity is obtained);
the ranging and/or sidelink positioning service is allowed, transmitting a notification to the first entity and performing information verification with the first entity are required, and in a case that the first entity does not feed back a verification response, exposure of a location of the first entity is allowed (i.e., a notification needs to be transmitted to the first entity and information verification needs to be performed with the first entity; by default, in a case that the first entity does not feed back a verification response, the information verification is passed, and the exposure of the location of the first entity is allowed);
the ranging and/or sidelink positioning service is allowed, transmitting a notification to the first entity and performing information verification with the first entity are required, and in a case that the first entity does not feed back a verification response, exposure of a location of the first entity is not allowed (i.e., a notification needs to be transmitted to the first entity and information verification needs to be performed with the first entity; by default, in a case that the first entity does not feed back a verification response, the information verification fails, and the exposure of the location of the first entity is not allowed).

In some practicable implementations, settings of pieces of privacy setting information in privacy configurations associated with different call and/or session unrelated classes may be different.

For example, the privacy setting information included in the first privacy configuration associated with the core network element, the trusted AF, or the non-external LCS client may be any of the following:
the ranging and/or sidelink positioning service is not allowed;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed.

For example, the privacy setting information in the second privacy configuration associated with the first list and the privacy setting information in the fourth privacy configuration associated with the third list may be any of the following:
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed.

For example, the privacy setting information in the third privacy configuration associated with the second list may be any of the following:
the ranging and/or sidelink positioning service is not allowed;
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed.

In some practicable implementations, the time setting information may include any of the following: a time period in which the ranging and/or sidelink positioning service is allowed, or a time period in which the ranging and/or sidelink positioning service is not allowed.

In some practicable implementations, the area range setting information may include any one of the following: an area range in which the ranging and/or sidelink positioning service is allowed, or an area range in which the ranging and/or sidelink positioning service is not allowed.

In some practicable implementations, the location service client list may include:
an LCS client that broadcasts location-related information;
an operation and maintenance LCS client in a home public land mobile network (HPLMN);
an operation and maintenance LCS client in a visited public land mobile network (VPLMN);
an LCS client that records anonymous location information;
an LCS client that supports bearer services, remote services or supplementary services to a target UE;
an LCS client of a network data analytics function (NWDAF) in the HPLMN (when the UE is currently being served by the HPLMN);
an LCS client of an NWDAF in the VPLMN.

In some practicable implementations, the GMLC address list may include: an address of a GMLC in the local network that is allowed to provide the ranging/SL positioning service for the first entity.

Step 303: whether the service request is allowed is determined based on the privacy profile.

It is understandable that after obtaining the privacy profile, the privacy profile corresponding to the user equipment can be queried to determine whether the service request sent by the transmission end is allowed.

In some practicable implementations, if the ranging and/or sidelink positioning privacy indicator in the privacy profile indicates allowing, it is determined that the service is allowed. In some practicable implementations, if the ranging and/or sidelink positioning privacy indicator in the privacy profile indicates allowing, and the identifier of the transmission end is not included in the privacy profile, it is determined that the service request is not allowed.

In some practicable implementations, in a case that the ranging and/or sidelink positioning privacy indicator in the privacy profile indicates "not allowing", even if the identifier of the transmission end is included in the privacy profile, it is determined that the service request is not allowed.

In the present invention, the GMLC entity receives the service request sent by the transmission end, then obtains the privacy profile associated with the identifier of the user equipment from the UDM entity, and finally determines whether the service request is allowed based on the privacy profile. In this way, whether the service request sent by the transmission end is allowed can be accurately determined based on the privacy profile, thereby improving the security of the ranging and/or sidelink positioning service for the user equipment.

Reference is made to FIG. 4, which is a flow chart of a data processing method according to embodiments of the present invention. As shown in FIG. 4, the method is applied to a GMLC entity, and the method may include but is not limited to the following steps.

Step 401: a service request transmitted by a transmission end is received, where the service request includes an identifier of a user equipment.

Step 402: a privacy profile associated with the identifier of the user equipment is obtained from a UDM entity, where the privacy profile is a file associated with a ranging and/or sidelink positioning service.

Step 403: whether the service request is allowed is determined based on the privacy profile.

In some practicable implementations, whether the service request is allowed may be determined based on an indication of a ranging and/or sidelink positioning privacy indicator in the privacy profile.

Specifically, if the ranging and/or sidelink positioning privacy indicator indicates that ranging and/or sidelink positioning is not allowed, it is determined that the service request is not allowed.

If the ranging and/or sidelink positioning privacy indicator indicates that ranging and/or sidelink positioning is allowed, it is needed to further determine whether the identifier of the transmission end is included in various call and/or session unrelated classes, a location service client list, and a GMLC address list of the privacy profile. If it is determined that the identifier of the transmission end is not included in the privacy profile, the service request of the transmission end is not allowed; if the identifier of the transmission end is included in the various call and/or session unrelated classes of the privacy profile, it is needed to further determine whether the service request is allowed in combination with the privacy configuration associated with the identifier of the transmission end in the privacy profile.

In some practicable implementations, whether the service request is allowed may be determined based on whether each call and/or session unrelated class in the privacy profile contains an identifier of the transmission end and whether the privacy configuration associated with the identifier of the transmission end is satisfied.

Specifically, if the identifier of the transmission end is not included in each call and/or session unrelated class, it is determined that the service request is not allowed.

Or, in a case that the identifier of the transmission end is included in the call and/or session unrelated class, whether the service request is allowed may be determined by further combining the first privacy configuration associated with the identifier of the transmission end.

For example, the privacy setting information in the first privacy configuration associated with the identifier of the transmission end is that: the ranging and/or sidelink positioning service is allowed and transmitting a notification to the first entity is not required; the time setting information is a time period in which the ranging and/or sidelink positioning service is allowed; the area range setting information is an area range in which the ranging and/or sidelink positioning service is allowed. If the time when the transmission end sends the service request is within the time period in which the ranging and/or sidelink positioning service is allowed, and the location of the transmission end is within the area range in which the ranging and/or sidelink positioning service is allowed, it is determined that the service request of the transmission end is allowed.

In some practicable implementations, whether the service request is allowed is determined based on whether the location service client list in the privacy profile contains an identifier of the transmission end.

Specifically, if the location service client list includes the identifier of the transmission end, it is determined that the service request is allowed; if the location service client list does not include the identifier of the transmission end, it is determined that the service request is not allowed.

In some practicable implementations, whether the service request is allowed is determined based on whether the address of the GMLC is included in the GMLC address list in the privacy profile.

Specifically, if the GMLC address list includes the address of the GMLC, it is determined that the service request is allowed; if the GMLC address list does not include the address of the GMLC, it is determined that the service request is not allowed.

In the present invention, the GMLC entity receives the service request sent by the transmission end, then obtains the privacy profile associated with the identifier of the user equipment from the UDM entity, and finally determines whether the service request is allowed based on the privacy profile. In this way, whether the service request sent by the transmission end is allowed can be accurately determined based on the privacy profile, thereby improving the security of the ranging and/or sidelink positioning service for the user equipment.

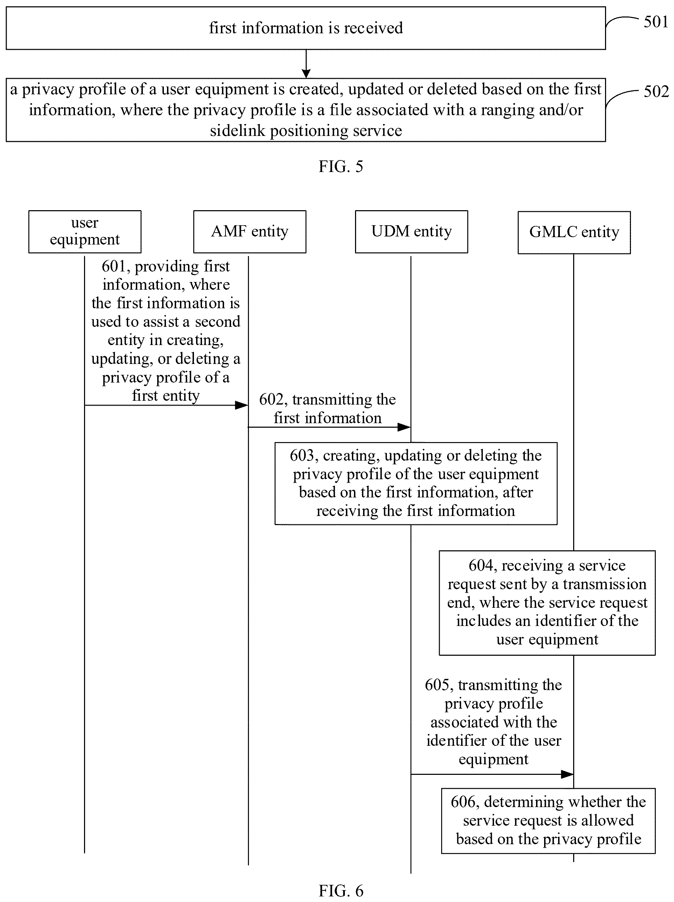

Reference is made to FIG. 5, which is a flow chart of a data processing method according to embodiments of the present invention. As shown in FIG. 5, the method is applied to a UDM entity, and the method may include but is not limited to the following steps.

Step 501: first information is received.

The first information is used to assist the UDM entity in creating, updating or deleting a privacy profile of a user equipment.

The first information may include ranging and/or sidelink positioning authorization data of the user equipment, such as: whether the user equipment allows an NF, an AF, an LCS client, a Client UE, a Server UE, etc., to obtain ranging and/or sidelink positioning information; in a case of allowing obtaining the ranging and/or sidelink positioning information, whether it is needed to further transmit a notification to the first entity, whether a privacy verification is required, whether a response needs to be received, before the location of the first entity is obtained.

For example, in a case that the first entity registers application A for the first time and allows application A to obtain the ranging and/or sidelink positioning service after transmitting a notification, the first information may include: the identifier of application A, and that the ranging and/or sidelink positioning service is allowed while transmitting a notification to the user equipment is required.

In some practicable implementations, the UDM entity may receive, via the AMF entity, the first information provided by the user equipment, or may receive the first information provided by the AF network element via the AF network element.

It should be noted that in a case that the UDM entity receives the first information provided by the user equipment via the AMF entity, the user equipment first provides the first information to the authentication management function (Authentication Management Function, AMF) entity, and the AMF entity forwards the first information to the unified data management UDM entity, so that the unified data management UDM entity receives the first information provided by the user equipment via the AMF.

Step 502: a privacy profile of a user equipment is created, updated or deleted based on the first information, where the privacy profile is a file associated with a ranging and/or sidelink positioning service.

In the present invention, in a case that the first information is received by the unified data management UDM entity, and it is determined that the UDM does not contain the privacy profile corresponding to the user equipment, then the first information is used to assist the unified data management UDM entity in creating the privacy profile of the user equipment; in a case that the first information is received by the unified data management UDM entity, and it is determined that the unified data management UDM entity contains the privacy profile corresponding to the user equipment but they are not the same, then the first information is used to assist the unified data management UDM entity in updating the privacy profile of the user equipment; in a case that the first information provided by the first entity includes a deletion indication, the first information is used to assist the unified data management UDM entity in deleting the privacy profile of the user equipment.

In some practicable implementations, the privacy profile may include at least one of the following:
a ranging and/or sidelink positioning privacy indicator, each call and/or session unrelated class, a location service client list, a GMLC address list.

In some practicable implementations, the ranging and/or sidelink positioning privacy indicator is used to indicate one or more of the following: ranging and/or sidelink positioning is allowed, ranging and/or sidelink positioning is not allowed, or a valid time period of the ranging and/or sidelink positioning privacy indicator.

In a case that the ranging and/or sidelink positioning privacy indicator indicates that ranging and/or sidelink positioning is allowed, it may be understood as the user equipment allowing the NF, AF, LCS client, client UE, server UE, etc., that it has authorized to perform the ranging and/or sidelink positioning service for it.

In a case that the ranging and/or sidelink positioning privacy indicator indicates that ranging and/or sidelink positioning is not allowed, it may be understood as the user equipment not allowing any NF, AF, LCS client, client UE, server UE, etc., to perform the ranging and/or sidelink positioning service for it.

The valid time period of the ranging and/or sidelink positioning privacy indicator indicated by the privacy indicator may be understood as a valid duration of the ranging and/or sidelink positioning privacy indicator, where the privacy indicator becomes invalid after this valid duration expires.

In some practicable implementations, the call and/or session unrelated class may include at least one of the following:
a core network element, a trusted AF, or a non-external location service (LCS) client;
a first list, where the first list includes a first identifier of one or more of: an untrusted AF entity, or an external LCS client;
a second list, where the second list includes a second identifier of one or more of: a client user equipment (Client UE), or a server user equipment (Server UE); or
a third list, where the third list includes a third identifier of one or more ranging and/or sidelink positioning applications.

Any client identified as belonging to the call and/or session unrelated class may include an LCS client. Any entity identified as belonging to the call and/or session unrelated class may be any NF entity, or a trusted AF entity.

It should be noted that the trusted AF entity may be an AF deployed by the operator itself, and the untrusted AF entity may be an AF deployed by a third party.

In some practicable implementations, the call and/or session unrelated class may further include at least one of the following:
first privacy configuration associated with the core network element, the trusted AF, or the non-external LCS client; a second privacy configuration associated with each first identifier in the first list; a third privacy configuration associated with each second identifier in the second list; or a fourth privacy configuration associated with each third identifier in the third list.

In some practicable implementations, the privacy configuration may include privacy setting information, time setting information, and area range setting information.

In some practicable implementations, the privacy setting information may include any one of the following:
the ranging and/or sidelink positioning service is not allowed;
the ranging and/or sidelink positioning service is allowed, and transmitting a notification to the first entity is not required (i.e., the location of the first entity can be obtained without transmitting a notification to the first entity);
the ranging and/or sidelink positioning service is allowed, and transmitting a notification to the first entity is required (i.e., a notification needs to be transmitted to the first entity to obtain the location of the first entity);
the ranging and/or sidelink positioning service is allowed, and transmitting a notification to the first entity and performing information verification with the first entity are required (i.e., a notification needs to be transmitted to the first entity, and in a case that the information verification is passed, the location of the first entity is obtained);
the ranging and/or sidelink positioning service is allowed, transmitting a notification to the first entity and performing information verification with the first entity are required, and in a case that the first entity does not feed back a verification response, exposure of a location of the first entity is allowed (i.e., a notification needs to be transmitted to the first entity and information verification needs to be performed with the first entity; by default, in a case that the first entity does not feed back a verification response, the information verification is passed, and the exposure of the location of the first entity is allowed);
the ranging and/or sidelink positioning service is allowed, transmitting a notification to the first entity and performing information verification with the first entity are required, and in a case that the first entity does not feed back a verification response, exposure of a location of the first entity is not allowed (i.e., a notification needs to be transmitted to the first entity and information verification needs to be performed with the first entity; by default, in a case that the first entity does not feed back a verification response, the information verification fails, and the exposure of the location of the first entity is not allowed).

In some practicable implementations, pieces of privacy setting information in privacy configurations associated with different call and/or session unrelated classes may be different.

For example, the privacy setting information included in the first privacy configuration associated with the core network element, the trusted AF, or the non-external LCS client may be any of the following:
the ranging and/or sidelink positioning service is not allowed;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed.

For example, the privacy setting information in the second privacy configuration associated with the first list and the privacy setting information in the fourth privacy configuration associated with the third list may be any of the following:
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed.

For example, the privacy setting information in the third privacy configuration associated with the second list may be any of the following:
the ranging and/or sidelink positioning service is not allowed;
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed.

In some practicable implementations, the time setting information may include any of the following: a time period in which the ranging and/or sidelink positioning service is allowed, or a time period in which the ranging and/or sidelink positioning service is not allowed.

In some practicable implementations, the area range setting information may include any one of the following: an area range in which the ranging and/or sidelink positioning service is allowed, or an area range in which the ranging and/or sidelink positioning service is not allowed.

In some practicable implementations, the location service client list may include:
an LCS client that broadcasts location-related information;
an operation and maintenance LCS client in a home public land mobile network (HPLMN);
an operation and maintenance LCS client in a visited public land mobile network (VPLMN);
an LCS client that records anonymous location information;
an LCS client that supports bearer services, remote services or supplementary services to a target UE;
an LCS client of a network data analytics function (NWDAF) in the HPLMN (when the UE is currently being served by the HPLMN);
an LCS client of an NWDAF in the VPLMN.

In some practicable implementations, the GMLC address list may include: an address of a GMLC in the local network that is allowed to provide the ranging/SL positioning service for the first entity.

In the present invention, the UDM entity receives the first information for assisting the UDM entity in creating, updating, or deleting the privacy profile of the user equipment, and creates, updates, or deletes the privacy profile of the user equipment based on the first information, and thus the privacy profile corresponding to the user equipment can be determined accurately.

Reference is made to FIG. 6, which is a signaling interaction diagram of a data processing method according to embodiments of the present invention. As shown in the figure, the method may include but is not limited to the following steps.

In step 601, a user equipment provides first information to an AMF, where the first information is used to assist a UDM entity in creating, updating, or deleting a privacy profile of the user equipment, and the privacy profile is a file associated with a ranging and/or sidelink positioning service.

Step 602: after obtaining the first information, the AMF sends the first information to the UDM entity.

Step 603: after receiving the first information, the UDM entity creates, updates or deletes the privacy profile of the user equipment based on the first information.

Step 604: the GMLC entity receives a service request sent by a transmission end, where the service request includes an identifier of the user equipment.

Step 605: the GMLC entity obtains the privacy profile associated with the identifier of the user equipment from the UDM entity.

Step 606: the GMLC entity determines whether the service request is allowed based on the privacy profile.

Therefore, the first information provided by the user equipment assists the unified data management UDM entity to create, update or delete the privacy profile of the user equipment, and then the GMLC entity determines whether the service request is allowed based on the privacy profile. In this way, the privacy profile corresponding to the user equipment can be accurately determined, and the GMLC entity can accurately determine whether the service request sent by the transmission end is allowed, thereby improving the security of the ranging and/or sidelink positioning service for the user equipment.

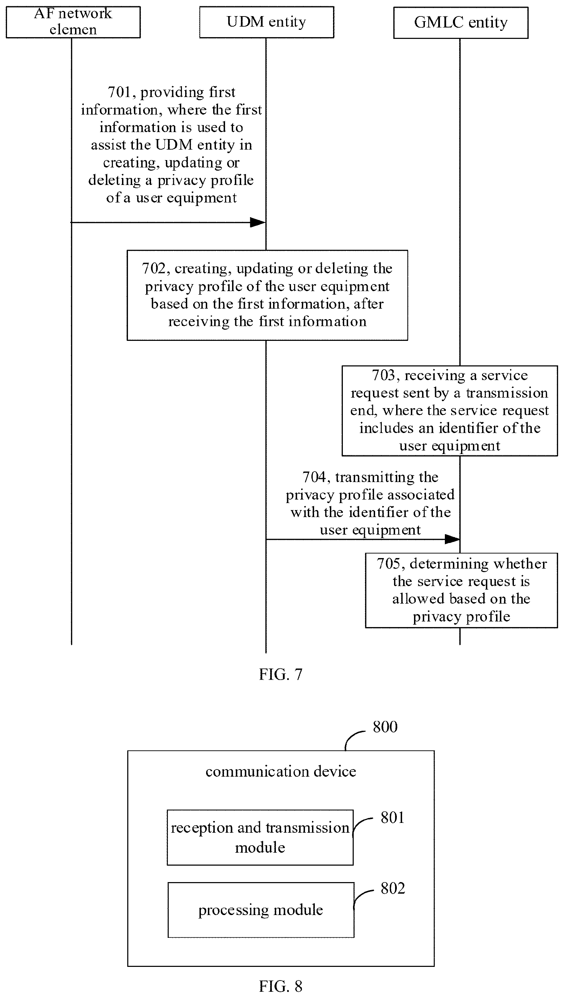

Reference is made to FIG. 7, which is a signaling interaction diagram of a data processing method according to embodiments of the present invention. As shown in the figure, the method may include but is not limited to the following steps.

In step 701, an AF network element provides first information to a UDM entity, where the first information is used to assist the UDM entity in creating, updating or deleting a privacy profile of a user equipment, and the privacy profile is a file associated with a ranging and/or sidelink positioning service.

Step 702: after receiving the first information, the UDM entity creates, updates or deletes the privacy profile of the user equipment based on the first information.

Step 703: the GMLC entity receives a service request sent by a transmission end, where the service request includes an identifier of the user equipment.

Step 704: the GMLC entity obtains the privacy profile associated with the identifier of the user equipment from the UDM entity.

Step 705: the GMLC entity determines whether the service request is allowed based on the privacy profile.

Therefore, the first information provided by the AF network element assists the unified data management UDM entity in creating, updating or deleting the privacy profile of the user equipment, and then the GMLC entity determines whether the service request is allowed based on the privacy profile. In this way, the privacy profile corresponding to the user equipment can be accurately determined, and the GMLC entity can accurately determine whether the service request sent by the transmission end is allowed, thereby improving the security of the ranging and/or sidelink positioning service for the user equipment.

Reference is made to FIG. 8, which is a schematic structural diagram of a communication device according to embodiments of the present invention. The communication device 800 shown in FIG. 8 may include a reception and transmission module 801 and a processing module 802. The reception and transmission module 801 may include a transmission module and/or a reception module. The transmission module is configured to implement a transmission function, and the reception module is used to implement a reception function. The reception and transmission module 801 may implement a transmission function and/or a reception function.

The communication device 800 may be a first entity, or a device in a first entity, or a device that may be used in conjunction with a first entity.

The communication device 800 is on the first entity side:
the reception and transmission module 801 is configured to provide first information, where the first information is used to assist a UDM entity in creating, updating or deleting a privacy profile of a user equipment, and the privacy profile is a file associated with a ranging and/or sidelink positioning service.

In some practicable implementations, the first entity is at least one of the following: the user equipment or an application function AF network element.

In summary, the first entity provides the first information for assisting the UDM entity in creating, updating or deleting the privacy profile of the user equipment, where the privacy profile is a file associated with the ranging and/or sidelink positioning service. In this way, the UDM entity can be assisted in creating, updating, or deleting the privacy profile of the user equipment, and thus the privacy profile corresponding to the user equipment can be determined accurately.

Alternatively, the communication device 800 may be a gateway mobile location center GMLC entity, or a device in a gateway mobile location center GMLC entity, or a device that may be used in conjunction with a gateway mobile location center GMLC entity.

The communication device 800 is on the GMLC entity side:
the reception and transmission module 801 is configured to receive a service request sent by a transmission end, where the service request includes an identifier of a user equipment;
the processing module 802 is configured to:
   obtain a privacy profile associated with the identifier of the user equipment from a UDM entity, where the privacy profile is a file associated with a ranging and/or sidelink positioning service; and
   determine whether the service request is allowed based on the privacy profile.

In some practicable implementations, the processing module 802 is further configured to:
determine whether the service request is allowed based on an indication of a ranging and/or sidelink positioning privacy indicator in the privacy profile; and/or
determine whether the service request is allowed based on whether a call and/or session unrelated class in the privacy profile contains an identifier of the transmission end and whether a privacy configuration associated with the identifier of the transmission end is satisfied; and/or
determine whether the service request is allowed based on whether a location service client list in the privacy profile contains an identifier of the transmission end; and/or
determine whether the service request is allowed based on whether a GMLC address list in the privacy profile contains an address of the GMLC.

In some practicable implementations, the ranging and/or sidelink positioning privacy indicator is used to indicate one or more of the following: ranging and/or sidelink positioning is allowed, ranging and/or sidelink positioning is not allowed, or a valid time period of the ranging and/or sidelink positioning privacy indicator.

In some practicable implementations, the call and/or session unrelated class includes at least one of:
a core network element, a trusted AF, or a non-external location service (LCS) client;
a first list, where the first list includes a first identifier of one or more of: an untrusted AF entity, or an external LCS client;
a second list, where the second list includes a second identifier of one or more of: a client user equipment (Client UE), or a server user equipment (Server UE); or
a third list, where the third list includes a third identifier of one or more ranging and/or sidelink positioning applications.

In some practicable implementations, the call and/or session unrelated class further includes at least one of:
a first privacy configuration associated with the core network element, the trusted AF, or the non-external LCS client; a second privacy configuration associated with each first identifier in the first list; a third privacy configuration associated with each second identifier in the second list; or a fourth privacy configuration associated with each third identifier in the third list.

In some practicable implementations, the privacy configuration includes privacy setting information, time setting information, and area range setting information.

In some practicable implementations, the privacy setting information includes any one of:
the ranging and/or sidelink positioning service is not allowed;
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed;
the time setting information includes any one of: a time period in which the ranging and/or sidelink positioning service is allowed, or a time period in which the ranging and/or sidelink positioning service is not allowed; or
the area range setting information includes any one of: an area range in which the ranging and/or sidelink positioning service is allowed, or an area range in which the ranging and/or sidelink positioning service is not allowed.

In some practicable implementations, the processing module 802 is configured to:
determine that the service request is not allowed, in a case that the ranging and/or sidelink positioning privacy indicator in the privacy profile indicates allowing and the identifier of the transmission end is not included in the privacy profile.

The communication device 800 provided in the above embodiments of the present invention can achieve the same or similar beneficial effects as the data processing method provided in some of the above embodiments, which will not be further described in detail herein.

In summary, the GMLC entity receives the service request sent by the transmission end, then obtains the privacy profile associated with the identity of the user equipment from the UDM entity, and finally determines whether the service request is allowed based on the privacy profile. In this way, whether the service request sent by the transmission end is allowed can be accurately determined based on the privacy profile, thereby improving the security of the ranging and/or sidelink positioning service for the user equipment.

The communication device 800 may be a UDM entity, or a device in a UDM entity, or a device that may be used in conjunction with a UDM entity.

The communication device 800 is on the UDM entity side:
the reception and transmission module 801 is configured to receive first information;
the processing module 802 is used to create, update or delete a privacy profile of a user equipment based on the first information, where the privacy profile is a file associated with a ranging and/or sidelink positioning service.

In some practicable implementations, the privacy profile includes at least one of the following:
a ranging and/or sidelink positioning privacy indicator, a call and/or session unrelated class, a location service client list, or a GMLC address list.

In some practicable implementations, the ranging and/or sidelink positioning privacy indicator is used to indicate one or more of: ranging and/or sidelink positioning is allowed, ranging and/or sidelink positioning is not allowed, or a valid time period of the ranging and/or sidelink positioning privacy indicator.

In some practicable implementations, the call and/or session unrelated class includes at least one of:
a core network element, a trusted AF, or a non-external location service (LCS) client;
a first list, where the first list includes a first identifier of one or more of: an untrusted AF entity, or an external LCS client;
a second list, where the second list includes a second identifier of one or more of: a client user equipment (Client UE), or a server user equipment (Server UE); or
a third list, where the third list includes a third identifier of one or more ranging and/or sidelink positioning applications.

In some practicable implementations, the call and/or session unrelated class further includes at least one of:
a first privacy configuration associated with the core network element, the trusted AF, or the non-external LCS client; a second privacy configuration associated with each first identifier in the first list; a third privacy configuration associated with each second identifier in the second list; or a fourth privacy configuration associated with each third identifier in the third list.

In some practicable implementations, the privacy configuration includes privacy setting information, time setting information, and area range setting information.

In some practicable implementations, the privacy setting information includes any one of:
the ranging and/or sidelink positioning service is not allowed;
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed;
the time setting information includes any one of: a time period in which the ranging and/or sidelink positioning service is allowed, or a time period in which the ranging and/or sidelink positioning service is not allowed; or
the area range setting information includes any one of: an area range in which the ranging and/or sidelink positioning service is allowed, or an area range in which the ranging and/or sidelink positioning service is not allowed.

The communication device 800 provided in the above embodiments of the present invention can achieve the same or similar beneficial effects as the data processing method provided in some of the above embodiments, which will not be further described in detail herein.

In the present invention, the UDM entity receives the first information for assisting the UDM entity in creating, updating, or deleting the privacy profile of the user equipment, and creates, updates, or deletes the privacy profile of the user equipment based on the first information, and thus the privacy profile corresponding to the user equipment can be accurately determined.

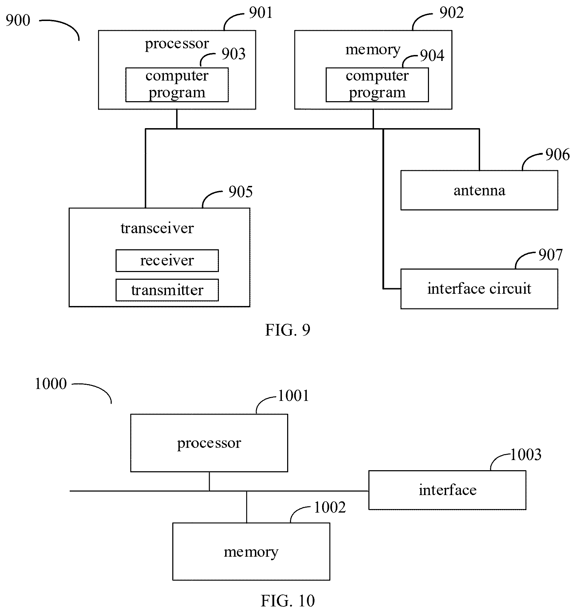

Reference is made to FIG. 9, which is a schematic structural diagram of another communication device 900 according to embodiments of the present invention. The communication device 900 may be a first entity, a UDM entity, a GMLC entity, or may be a chip, chip system, or processor that supports a first entity to implement the above method, or may be a chip, chip system, or processor that supports a UDM entity to implement the above method, or may be a chip, chip system, or processor that supports a GMLC entity to implement the above method. The communication device 900 may be configured to implement the method described in the above method embodiments. For details, reference may made to the description in the above method embodiments.

The communication device 900 may include one or more processors 901. The processor 901 may be a general-purpose processor or a special-purpose processor, or the like. For example, the processor may be a baseband processor or a central processing unit. The baseband processor may be configured to process communication protocols and communication data. The central processing unit may be configured to control the communication device (such as a base station, a baseband chip, a user equipment, a user equipment chip, a DU or a CU, etc.), execute a computer program, and process data for the computer program.

In some practicable implementations, the communication device 900 may further include one or more memories 902, on which a computer program 904 may be stored. The processor 901 executes the computer program 904 to cause the communication device 900 to perform the method described in the above method embodiments. In some practicable implementations, the memory 902 may further store data. The communication device 900 and the memory 902 may be arranged separately or integrated together.

In some practicable implementations, the communication device 900 may further include a transceiver 905 and an antenna 906. The transceiver 905 may be referred to as a reception and transmission unit, a transceiver unit, a reception and transmission circuit, etc., and is configured to implement reception and transmission functions. The transceiver 905 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

In some practicable implementations, the communication device 900 may further include one or more interface circuits 909. The interface circuit 909 is configured to receive code instructions and transmit them to the processor 901. The processor 901 executes the code instructions to cause the communication device 900 to perform the method described in the above method embodiments.

In an implementation, the processor 901 may include a transceiver for implementing reception and transmission functions. For example, the transceiver may be a reception and transmission circuit, an interface, or an interface circuit. The reception and transmission circuit, the interface or the interface circuit configured to implement the reception and transmission functions may be separated or integrated together. The above reception and transmission circuit, interface or interface circuit may be configured for reading and writing codes/data, or the above reception and transmission circuit, interface or interface circuit may be configured for signal transmission or transfer.

In an implementation, the processor 901 may store a computer program 903, and the computer program 903 is executed on the processor 901, to cause the communication device 900 to perform the method described in the above method embodiments. The computer program 903 may be embedded in the processor 901, and in this case, the processor 901 may be implemented by hardware.

In an implementation, the communication device 900 may include a circuit, and the circuit may implement functions of reception or transmission or communication in the above method embodiments. The processor and the transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a first entity, a UDM entity, or a GMLC entity, but the scope of the communication device described in the present invention is not limited thereto, and the structure of the communication device may not be limited to FIG. 9. The communication device may be a stand-alone device or may be part of a larger device. For example, the communication device may be:
(1) an independent integrated circuit (IC), or chip, or chip system or subsystem;
(2) a collection of one or more ICs, where in some practicable implementations, the IC collection may include a storage component for storing data and computer programs;
(3) ASIC, such as modem;
(4) a module that can be embedded into other devices;
(5) a receiver, user equipment, intelligent user equipment, a cellular phone, a wireless equipment, a handheld device, a mobile unit, a vehicle-mounted device, a network device, a cloud device, an artificial intelligence device, etc.;
(6) others, etc.

For a case where the communication device may be a chip or a chip system, reference may be made to FIG. 10, which is a structural diagram of a chip.

The chip shown in FIG. 10 includes a processor 1001 and an interface 1003. The quantity of processors 1001 may be one or more, and the quantity of interfaces 1003 may be multiple.

For a case where the chip is configured to implement the functions of the user equipment in the embodiments of the present invention:
the interface 1003 is configured to receive code instructions and transmit them to the processor;
the processor 1001 is configured to execute the code instructions to perform the data processing method described in some of the above embodiments.

For a case where the chip is configured to implement the functions of the transmission end in the embodiments of the present invention:
the interface 1003 is configured to receive code instructions and transmit them to the processor;
the processor 1001 is configured to execute the code instructions to perform the data processing method described in some of the above embodiments.

In some practicable implementations, the chip 1000 further includes a memory 1002, and the memory 1002 is configured to store needed computer programs and data.

Those skilled in the art can also understand that various illustrative logical blocks and steps listed in the embodiments of the present invention can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present invention.

Embodiments of the present invention further provide a communication system, which includes the communication device as the first entity, the communication device as the gateway mobile location center GMLC entity, and the communication device as the unified data management UDM entity in the embodiment of FIG. 8, or the system includes the communication device as the first entity, the communication device as the gateway mobile location center GMLC entity, and the communication device as the unified data management UDM entity in the embodiment of FIG. 9.

The present invention further provides a readable storage medium, on which instructions are stored. When the instructions are executed by a computer, functions of any of the above method embodiments are implemented.

The present invention further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present invention are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer readable storage medium may be any available medium that can be accessed by a computer, or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present invention are only for convenience of description and are not used to limit the scope of the embodiments of the present invention, or to indicate the order.

At least one in the present invention may also be described as one or more, and multiple may be two, three, four or more. "And/or" describes the association relationship of associated objects, which indicates that three relationships may exist. For example, A and/or B may represent: A exists alone, A and B exist at the same time, and B exists alone, where each of A and B may be a single item or multiple items. The character "/" generally indicates that the previous and next associated objects are in an "or" relationship. "At least one (items) of the following" or similar expressions refers to any combination of these items, including any combination of single items or multiple items. For example, at least one of a, b and c may represent: a; or b; or c; or a and b; or a and c; or b and c; or a, b and c; where each of a, b and c may be a single item or multiple items. The present invention is not limited thereto. In the embodiments of the present invention, for a technical feature, features in the technical feature are distinguished by "first", "second", "third", "A", "B", "C" and "D", and there is no order of precedence or size among the features described by "first", "second", "third", "A", "B", "C" and "D".

The corresponding relationships shown in each table in the present invention can be configured or predefined. The values of the information in each table are only examples and can be configured as other values, which is not limited by the present invention. When the correspondence between information and each parameter is configured, it is not necessarily required to configure all the correspondences shown in each table. For example, in the table in the present invention, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present invention may be understood as defined, predefined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present invention.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present invention, but the protection scope of the present invention is not limited thereto. Any technician familiar with the technical field can easily think of changes or substitutions within the technical scope of in the present invention, all of which shall fall within the protection scope of the present invention. Therefore, the protection scope of the present invention is defined by the protection scope of the claims.

## Claims

1. A data processing method, performed by a first entity, comprising:
providing first information, wherein the first information is used to assist a unified data management (UDM) entity in creating, updating or deleting a privacy profile of a user equipment, and the privacy profile is a file associated with a ranging and/or sidelink positioning service.

2. The data processing method according to claim 1, wherein the first entity is at least one of: the user equipment or an application function (AF) network element.

3. A data processing method, performed by a gateway mobile location center (GMLC) entity, comprising:
receiving a service request transmitted by a transmission end, wherein the service request comprises an identifier of a user equipment;
obtaining a privacy profile associated with the identifier of the user equipment from a unified data management (UDM) entity, wherein the privacy profile is a file associated with a ranging and/or sidelink positioning service; and
determining, based on the privacy profile, whether the service request is allowed.

4. The data processing method according to claim 3, wherein the determining, based on the privacy profile, whether the service request is allowed comprises:
determining whether the service request is allowed based on an indication of a ranging and/or sidelink positioning privacy indicator in the privacy profile; and/or
determining whether the service request is allowed based on whether a call and/or session unrelated class in the privacy profile contains an identifier of the transmission end and whether a privacy configuration associated with the identifier of the transmission end is satisfied; and/or
determining whether the service request is allowed based on whether a location service client list in the privacy profile contains an identifier of the transmission end; and/or
determining whether the service request is allowed based on whether a GMLC address list in the privacy profile contains an address of the GMLC.

5. The data processing method according to claim 4, wherein the ranging and/or sidelink positioning privacy indicator is used to indicate one or more of: ranging and/or sidelink positioning is allowed, ranging and/or sidelink positioning is not allowed, or a valid time period of the ranging and/or sidelink positioning privacy indicator.

6. The data processing method according to claim 4, wherein the call and/or session unrelated class comprises at least one of:
a core network element, a trusted AF, or a non-external location service (LCS) client;
a first list, wherein the first list comprises a first identifier of one or more of: an untrusted AF entity, or an external LCS client;
a second list, wherein the second list comprises a second identifier of one or more of: a client user equipment (Client UE), or a server user equipment (Server UE); or
a third list, wherein the third list comprises a third identifier of one or more ranging and/or sidelink positioning applications.

7. The data processing method according to claim 6, wherein the call and/or session unrelated class further comprises at least one of:
a first privacy configuration associated with the core network element, the trusted AF, or the non-external LCS client; a second privacy configuration associated with each first identifier in the first list; a third privacy configuration associated with each second identifier in the second list; or a fourth privacy configuration associated with each third identifier in the third list.

8. The data processing method according to claim 7, wherein the privacy configuration comprises privacy setting information, time setting information, and area range setting information.

9. The data processing method according to claim 8, wherein the privacy setting information comprises any one of:
the ranging and/or sidelink positioning service is not allowed;
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed;
the time setting information comprises any one of: a time period in which the ranging and/or sidelink positioning service is allowed, or a time period in which the ranging and/or sidelink positioning service is not allowed; or
the area range setting information comprises any one of: an area range in which the ranging and/or sidelink positioning service is allowed, or an area range in which the ranging and/or sidelink positioning service is not allowed.

10. The data processing method according to any one of claims 3 to 9, further comprising:
determining that the service request is not allowed, in a case that the ranging and/or sidelink positioning privacy indicator in the privacy profile indicates allowing and the identifier of the transmission end is not comprised in the privacy profile.

11. A data processing method, performed by a unified data management (UDM) entity, comprising:
receiving first information; and
creating, updating or deleting a privacy profile of a user equipment based on the first information, wherein the privacy profile is a file associated with a ranging and/or sidelink positioning service.

12. The data processing method according to claim 11, wherein the privacy profile comprises at least one of:
a ranging and/or sidelink positioning privacy indicator, a call and/or session unrelated class, a location service client list, or a gateway mobile location center (GMLC) address list.

13. The data processing method according to claim 12, wherein the ranging and/or sidelink positioning privacy indicator is used to indicate one or more of: ranging and/or sidelink positioning is allowed, ranging and/or sidelink positioning is not allowed, or a valid time period of the ranging and/or sidelink positioning privacy indicator.

14. The data processing method according to claim 12, wherein the call and/or session unrelated class comprises at least one of:
a core network element, a trusted AF, or a non-external location service (LCS) client;
a first list, wherein the first list comprises a first identifier of one or more of: an untrusted AF entity, or an external LCS client;
a second list, wherein the second list comprises a second identifier of one or more of: a client user equipment (Client UE), or a server user equipment (Server UE); or
a third list, wherein the third list comprises a third identifier of one or more ranging and/or sidelink positioning applications.

15. The data processing method according to claim 14, wherein the call and/or session unrelated class further comprises at least one of:
a first privacy configuration associated with the core network element, the trusted AF, or the non-external LCS client; a second privacy configuration associated with each first identifier in the first list; a third privacy configuration associated with each second identifier in the second list; or a fourth privacy configuration associated with each third identifier in the third list.

16. The data processing method according to claim 15, wherein the privacy configuration comprises privacy setting information, time setting information, and area range setting information.

17. The data processing method according to claim 16, wherein the privacy setting information comprises any one of:
the ranging and/or sidelink positioning service is not allowed;
the ranging and/or sidelink positioning service is allowed, and transmitting a notification to the first entity is not required;
the ranging and/or sidelink positioning service is allowed, and transmitting a notification to the first entity is required;
the ranging and/or sidelink positioning service is allowed, and transmitting a notification to the first entity and performing information verification with the first entity are required;
the ranging and/or sidelink positioning service is allowed, transmitting a notification to the first entity and performing information verification with the first entity are required, and in a case that the first entity does not feed back a verification response, exposure of a location of the first entity is allowed;
the ranging and/or sidelink positioning service is allowed, transmitting a notification to the first entity and performing information verification with the first entity are required, and in a case that the first entity does not feed back a verification response, exposure of a location of the first entity is not allowed;
the time setting information comprises any one of: a time period in which the ranging and/or sidelink positioning service is allowed, or a time period in which the ranging and/or sidelink positioning service is not allowed; or
the area range setting information comprises any one of: an area range in which the ranging and/or sidelink positioning service is allowed, or an area range in which the ranging and/or sidelink positioning service is not allowed.

18. A first entity, comprising:
a reception and transmission module, configured to provide first information, wherein the first information is used to assist a unified data management (UDM) entity in creating, updating or deleting a privacy profile of a user equipment, and the privacy profile is a file associated with a ranging and/or sidelink positioning service.

19. A gateway mobile location center (GMLC) entity, comprising:
a reception and transmission module, configured to receive a service request transmitted by a transmission end, wherein the service request comprises an identifier of a user equipment; and
a processing module, configured to:
obtain a privacy profile associated with the identifier of the user equipment from a unified data management (UDM) entity, wherein the privacy profile is a file associated with a ranging and/or sidelink positioning service; and
determine whether the service request is allowed based on the privacy profile.

20. A unified data management (UDM) entity, comprising:
a reception and transmission module, configured to receive first information; and
a processing module, configured to create, update or delete a privacy profile of a user equipment based on the first information, wherein the privacy profile is a file associated with a ranging and/or sidelink positioning service.

21. A communication device, comprising a processor and a memory, wherein the memory is configured to store a computer program, and the processor is configured to execute the computer program stored in the memory to cause the communication device to perform the data processing method according to any one of claims 1 to 2, or the processor is configured to execute the computer program stored in the memory to cause the communication device to perform the data processing method according to any one of claims 3 to 10, or the processor is configured to execute the computer program stored in the memory to cause the communication device to perform the data processing method according to any one of claims 11 to 17.

22. A communication device, comprising: a processor and an interface circuit,
wherein the interface circuit is configured to receive code instructions and transmit the code instructions to the processor; and the processor is configured to execute the code instructions to perform the data processing method according to any one of claims 1 to 2, or to execute the code instructions to perform the data processing method according to any one of claims 3 to 10, or to execute the code instructions to perform the data processing method according to any one of claims 11 to 17.

23. A communication system, comprising a first entity, a gateway mobile location center (GMLC) entity, and a unified data management (UDM) entity;
wherein the first entity is configured to perform the data processing method according to any one of claims 1 to 2, the GMLC entity is configured to perform the data processing method according to any one of claims 3 to 10, and the UDM entity is configured to perform the data processing method according to any one of claims 11 to 17.

24. A computer readable storage medium, configured to store instructions, wherein the instructions, when executed, cause the data processing method according to any one of claims 1 to 2 to be performed, or when executed, cause the data processing method according to any one of claims 3 to 10 to be performed, or when executed, cause the data processing method according to any one of claims 11 to 17 to be performed.
